# EUROPEAN PATENT SPECIFICATION

(11) **EP 3 665 938 B1**
(45) Date of publication and mention of the grant of the patent: **22.09.2021**
(21) Application number: 17755455.7
(22) Date of filing: 11.08.2017
(51) Int. Cl.: H04W 28/02, H04W 28/08, H04W 36/14, H04W 48/18, H04W 88/06, H04W 48/02, H04W 48/14, H04W 4/20

(54) **REALISING VOICE SERVICE**
REALISIERUNG EINES SPRACHDIENSTES
RÉALISATION D'UN SERVICE VOCAL

(43) Date of publication of application: 17.06.2020
(73) Proprietor: Nokia Solutions and Networks Oy, 02610 Espoo (FI)
(72) Inventor: SU, Lei, Shenzhen City, Guangdong 518067 (CN)
(74) Representative: Nokia EPO representatives
(86) International application number: PCT/EP2017/070432
(87) International publication number: WO 2019/029820

(56) References cited:
- WO-A1-2009/122411
- US-A1- 2006 046 714
- US-A1- 2017 171 782

## Description

### Technical Field

The invention relates to communications.

### Background

In recent years, Instant Messaging (IM) based voice services have been developed to replace or supplement circuit switched voice service. In IM based voice services voice is transmitted as data. Mobile network operators (MNO) which maintain circuit switched services have been challenged by over the top (OTT) providers which offer free IM based services.

Users expect from IM based voice services similar quality of service as they have received from circuit switched connections. In solutions presented so far there has been problems in latency and mobility, for example.

US 2017/171782 A1 discloses systems and methods for network-initiated handover in integrated small cell and WiFi (ISW) networks, wherein an inter-system mobility anchor control point is communicatively coupled to both an HeNB/LTE network and trusted WLAN access network (TWAN) and adapted to operate as a common control plane entity for both HeNB/LTE and TWAN access.

### Brief description

The present invention defines a user terminal apparatus according to claim 1, a method according to claim 8 and a computer program product according to claim 15.

Some embodiments are described in the dependent claims.

### Brief description of drawings

One or more examples of implementations are set forth in more detail in the accompanying drawings and the description below. Other features will be apparent from the description and drawings.
Figure 1 illustrates an example of communication environment;
Figure 2A illustrates a general architecture of an exemplary system;
Figure 2B is a flowchart illustrating an example embodiment of the operation of a Radio Access Network Adaptor;
Figure 3 is a signalling chart illustrating an example of setting up a self-serving cell;
Figure 4 illustrates an example of user terminal with the RAN Adaptor;
Figure 5 is a signalling chart illustrating an example of an embodiment;
Figure 6 is a flowchart illustrating an example of an embodiment of initiating a call session;
Figure 7 is a flowchart illustrating an example of an embodiment of responding to an incoming call;
Figure 8 is a flowchart illustrating an example of a handover;
Figure 9 illustrates an example of handover connections; and
Figures 10 and 11 illustrate simplified examples of apparatuses in which embodiments of the invention may be applied.

### Detailed description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

The coverage of cellular service can vary depending on weather conditions, distance from the serving cell, and obstructions on the signal path, for example. In some cases indoor coverage may be poor although outdoors the coverage is sufficient. This may be due to the structure of the building and selective glass windows which block radiation. One solution to improve indoor coverage is to use Wireless Local Area Network (WLAN, WiFi) as a replacement for cellular coverage. To this end the use of Voice over WiFi has been proposed. VoWiFi is one way of realizing IM based voice service

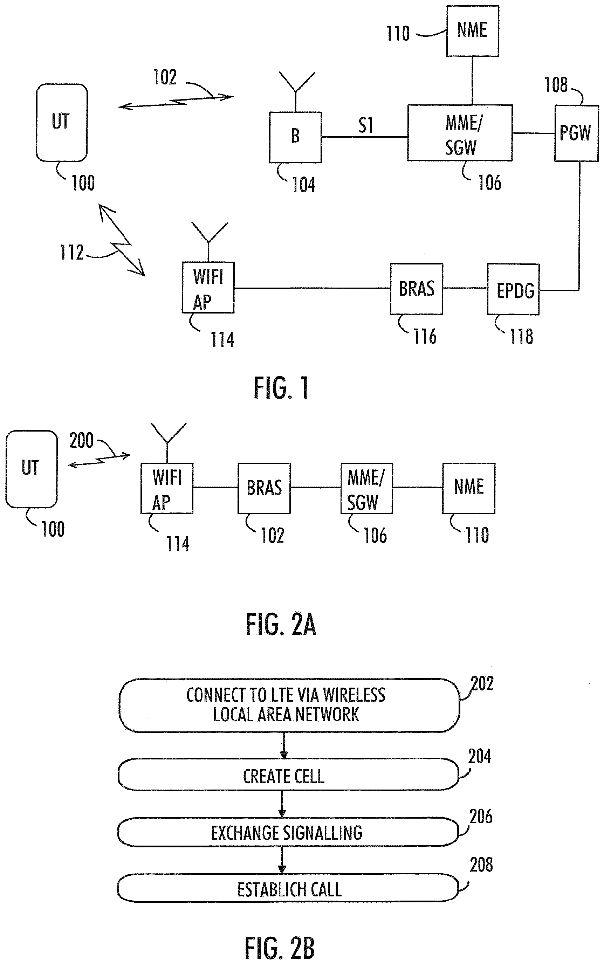

Figure 1 illustrates an example. A user terminal 100 may be connected 102 to a cellular network, such as Long Term Evolution (LTE) network or 5G network, via a network node 104 (may be referred to as a base station 104, eNodeB, or a base station apparatus). For example, the network node may be connected to Mobility Management Entity/Serving Gateway MME/SGW 106 using S1 interface, which may configured to direct the traffic to Packet Domain Gateway PGW 108. MME/SGW may refer to MME or SGW, or in some cases it may refer to both. That is, said MME and SGW may be implemented as a logically and/or physically integral entity.

The cellular Network may further comprise a Network Management System entity 110. One example of a cellular network may be the LTE network. In such case, the network node may be or be comprised in an evolved NodeB (eNodeB). On the other hand, network node may be a network node of a 5G network or some other future cellular network. For the purpose of simplicity, the following examples are set forth as being part of LTE network. However, it needs to be noted that the solutions and examples provided herein may be equally applicable to other types of cellular networks, of which the 5G network is one example, although some examples are described only using LTE and/or eNodeB(s).

The user terminal may also be connected 112 to a wireless local area network access point 114. If a voice over WiFi call is established, it goes from the access point to a Broadband remote access server BRAS 116 of the Internet operator to an enhanced Packet Domain Gateway 118 to the LTE network.

However, there are many problems associated with VoWiFi, such as latency, when the calls are routed via Internet and when they are routed via Enhanced Packet Domain Gateway ePDG of the LTE network. Because VoWiFi service provider may not control IP backbone or Wi-Fi network, Quality if service (QoS) class identifier cannot be applied in IP backbone and it may only be performed by ePDG or Trusted Wireless Access Gateway TWAG.

In addition, there are handover related problems. VoWiFi solution can't support handover between trusted Wi-Fi access and untrusted Wi-Fi access, because there is no mobility measurement between TWAG and ePDG. Further, different IP addresses are taken into use for WiFi network and LTE RAN, in order to provide connectivity towards core network, which cause complicated handover mechanism between WiFi network and the LTE network.

Further, similar with regular phone call, a single International Mobile Subscriber Identity IMSI (which is stored in Subscriber Identity Module SIM hardware) is used for mobile network operator MNO authentication in VoWiFi solution. If the serving MNO ePDG can't be reached via Internet somehow (e.g BRAS cut down Internet connectivity for marketing competition or due to BRAS is owned by another operator), the call path is broken and there is no alternative way to establish a new call although an ePDG of another operator might be available.

Figure 2A illustrates an example embodiment. To enable making voice calls using IM based applications especially when cellular (e.g. LTE) coverage is not available, is of poor quality or is lost, the user terminal 100 may be configured to communicate with a core network of cellular system (e.g. core network of LTE) via another wireless network such as a wireless local area network such as a IEEE 802.11 (WiFi) network by connecting 200 to the access point 114. IEEE denotes Institute of Electrical and Electronics Engineers. The user terminal is configured to emulate the operation of a cellular network node of the cellular network (e.g. an eNodeB in the case of LTE) by creating a self-serving cell. The user terminal requests the core network to establish a cell and establish required interfaces between the user terminal and the core network utilising IP Security Architecture (IPSec). The user terminal exchanges signalling with Mobile Management Entity of the cellular network over IPSec tunnel and establishes a voice over cellular network call (e.g. voice over LTE) and transmits voice traffic directly to the Serving Gateway 106 of the cellular network (e.g. the LTE network). That is, the voice over cellular network call is performed via said another wireless network. The Serving Gateway 106 may regard such call as a regular voice over cellular network call although said another wireless network is used as a physical transfer the voice data. In a way, it may be understood that the logical connection (e.g. voice over LTE) utilizes a connection of said another wireless network (e.g. physical connection). The cellular network node may refer to a network node of the cellular network (e.g. eNB).

Thus, for example, the user terminal may be configured to create an on-demand self-serving cell emulating the operation of an eNodeB and create a Voice over LTE call using wireless local area network connection as a backbone connection. The cell may be created if a user wishes to make a call when there is no LTE coverage or if during an ongoing call the LTE coverage is lost or of poor quality but wireless local area network connection is available.

Self-serving cell may be understood as cell that is generated by the user terminal, wherein the self-serving cell emulates the operation of a cellular cell. Thus, it may be seen as a cell of the cellular network by other network elements although it may have been generated by the user terminal using said another wireless network. For example, the self-serving cell may simulate the behavior of a network node (e.g. eNB) of the cellular network.

In an embodiment, the user terminal may comprise a Radio Access Network RAN adaptor application which is configured to create the self-serving cell and simulate network node (e.g. eNodeB) behaviour. The RAN adaptor may communicate with the IM client used in IM based voice services, such as for making IM based voice calls. Thus, the RAN adaptor may hide from the IM client the connection type used to create the IM based voice call. It may be noted that the RAN adaptor cannot service other user terminals since there is no air interface available in the self-serving cell.

In an embodiment, RAN Adaptor may be configured to create the self-serving cell or on-demand cell whenever a connection through another wireless network to the LTE Core network can be established. When the actual LTE coverage becomes unavailable, is of poor quality or is lost, a handover to the on-demand cell may be performed without any dropped calls.

Figure 2B is a flowchart illustrating an example embodiment of the operation of the RAN Adaptor.

In step 202, the adaptor is configured to connect to a core network of a Long Term Evolution (LTE) cellular network via another wireless network. In this specific example the wireless network, the wireless network is a wireless local area network such as according to IEEE 802.11 (WiFi) standard. However, any wireless network offering a connection to an LTE Network may be used as well. It is yet again noted that the LTE and eNodeB are used as examples. Hence, for example, the steps 202-208 may be performed in some other type of cellular network (e.g. 5G) by a network node of such cellular network.

The RAN Adaptor may be configured to emulate the operation of an eNodeB by
creating in step 204 a self-serving cell by requesting the core network to establish a cell and by establishing required interfaces between the apparatus and the core network utilising IP Security Architecture (IPSec), and by
exchanging in step 206 signalling with Mobile Management Entity of the LTE network over IPSec tunnel.

In step 208, the adaptor is configured to establish a voice over LTE call and transmit voice traffic to Serving Gateway of the LTE network.

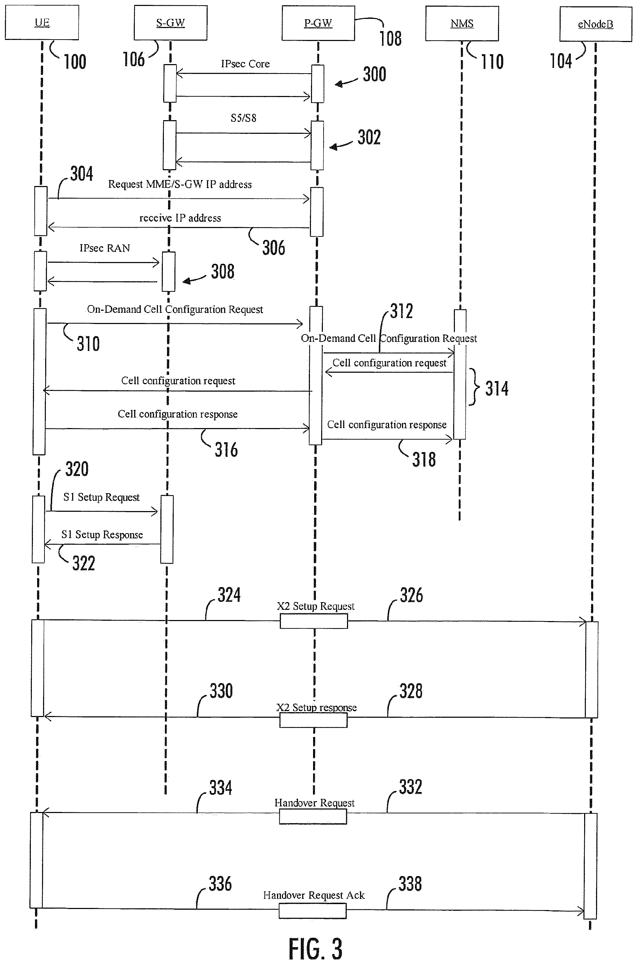

Figure 3 is a signaling chart illustrating an example of the creation of the self-serving cell. In this example, the user terminal had a connection to an eNodeB 104 but the connection is transferred to a wireless local area network connection.

In advance to the actual cell creation, necessary secure tunnels may be created to guarantee data security. In phase 300, IPsec Core tunnel is created between the SGW 106 and PGW 108. Next, in phase 302, S5/S8 interface is created between the SGW and PGW.

In phase 304, user terminal 100 is configured to request MME/SGW IP address from PGW 108. The PGW is configured to respond 306 to the user terminal with the MME/SGW IP address.

Next, IPSec radio access network (RAN) is setup 308 between user terminal 100 and SGW 106. IPsec RAN is an IPsec tunnel used for connecting the self-serving cell with MME/S-GW via BRAS (not shown in Figure 3).

The user terminal is next configured to request 310 self-serving cell or on-demand cell configuration from the NMS by transmitting a request to the PGW. The PGW forwards 312 the request to the NMS 110.

The NMS creates on-demand cells on top of the user terminal using cell configuration request signalling 314.

The user terminal transmits 316 as a response cell configuration status to the PGW which forwards 318 the response to the NMS.

Next, the user terminal request 320 S1 interface setup from the MME/SGW 106. The MME/SGW responds 322 S1 interface status over IPsec RAN.

In phase 324 the user terminal requests 324X2 interface setup. The setup request is forwarded 326 to the eNodeB by PGW.

The eNodeB responds 328 with X2 status and PGW forwards 330 the X2 status to the user terminal.

Finally in this example, the eNodeB requests 332 handover from the user terminal. The PGW forwards 334 the request to the user terminal. The user terminal response 336 is sent 338 via the PGW to the eNodeB.

In an embodiment, the request 310 transmitted by the user terminal comprises an IP address of the user terminal.

In an embodiment, the PGW replaces the IP address of the user terminal in the request with another IP address, before forwarding 312 the request to the NMS. Alternatively, the PGW may add said another IP address to the request. Hence, the forwarded request may comprise both IP addresses. Said another IP address may be an IP address to be used by the NMS for responding to the request (e.g. signalling 314). In some embodiments, said another IP address may enable the NMS to respond to the request. IP address may denote Internet Protocol address. Said another IP address may refer to Network-to-Network Interface (NNI) IP address used in communication between the NMS and the PGW. The IP address may be comprised in the header part of the transmitted request.

In an embodiment, the RAN adaptor may comprise eSIM information of a mobile network operator (MNO). An eSIM is an embedded subscriber identity module in a user terminal. Traditionally, subscriber identity in a user terminal is created with a physical SIM card obtained from a MNO and inserted to a card reader of the user terminal. The SIM contains International Mobile Subscriber Identity IMSI of the subscriber. Instead of a physical card, an eSIM is an embedded chip in the user terminal and it is non-replaceable.

In an embodiment, the RAN Adaptor may comprise more than one eSIMs with multiple subscriber identities. When making a call the IM client may use preferred eSIM and create a call session.

In an embodiment, the RAN Adaptor is configured to simulate eNodeB behaviour including NAS (Non-access stratum) layer, GTP-U (General Packet Radio Service Tunneling Protocol) and Stream Control Transmission Protocol (SCTP) encapsulation and decapsulation.

In an embodiment, the RAN adaptor may be controlled and managed by MNO NMS, and each MNO may own its RAN adaptor.

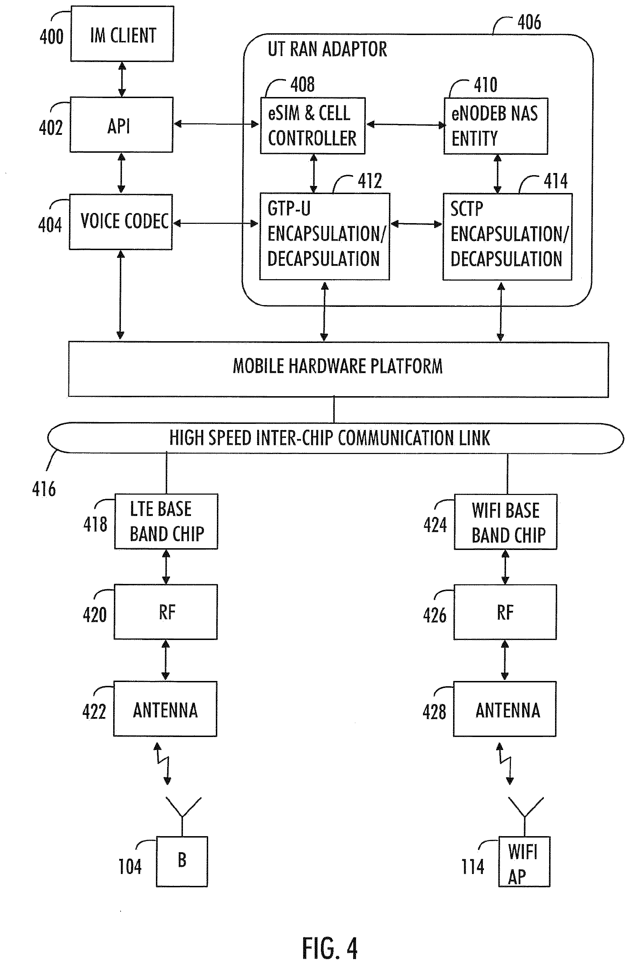

Figure 4 illustrates an example of user terminal with a RAN Adaptor installed. The figure illustrates an example of the relevant user terminal modules and how the RAN Adaptor may communicate with the IM client and provide VoLTE call service.

The subscriber or user interacts with the user terminal using an instant messaging client (IM client) 400 which may be used to initiate and respond to voice calls. Typically the IM client 400, being an application executed by the processor of the user terminal, interacts with the user terminal via an Application Programming Interface 402 of the user terminal. In case of voice calls, voice data is sent to a voice codec 404 which transforms voice into a digital form using suitable coding.

The user terminal comprises a RAN Adaptor 406, which may also be realised with an application. In an embodiment, the adaptor implementation comprises following components: An eSIM and Cell Controller 408 is configured to store SIM information and create/maintain MNO cell information. A NAS entity 410 is configured to simulate eNodeB behaviour for NAS signalling handling. The RAN Adaptor comprises an SCTP encapsulation/decapsulation unit 414 for NAS signalling transport format translation and IPSec encapsulation /decapsulation. The RAN Adaptor further comprises a GTP-U encapsulation /decapsulation unit 412 for voice data transport format translation and IPSec encapsulation/decapsulation. In an embodiment, the components or units may be realised with software or a combination of software and hardware.

When the IM client is used to make a voice call through LTE RAN, the voice signal from the IM client may be translated to voice data in the voice codec 404 and transmitted through the high speed inter-chip communication link to LTE base band chip 418 and then sent out via LTE radio frequency unit 420 and antenna 422 to the eNodeB 104.

When using the RAN Adaptor installation, the application is configured to provide an eNodeB functionality for voice calls. The Adaptor takes over the voice data processing before sending the data to WiFi base band chip.

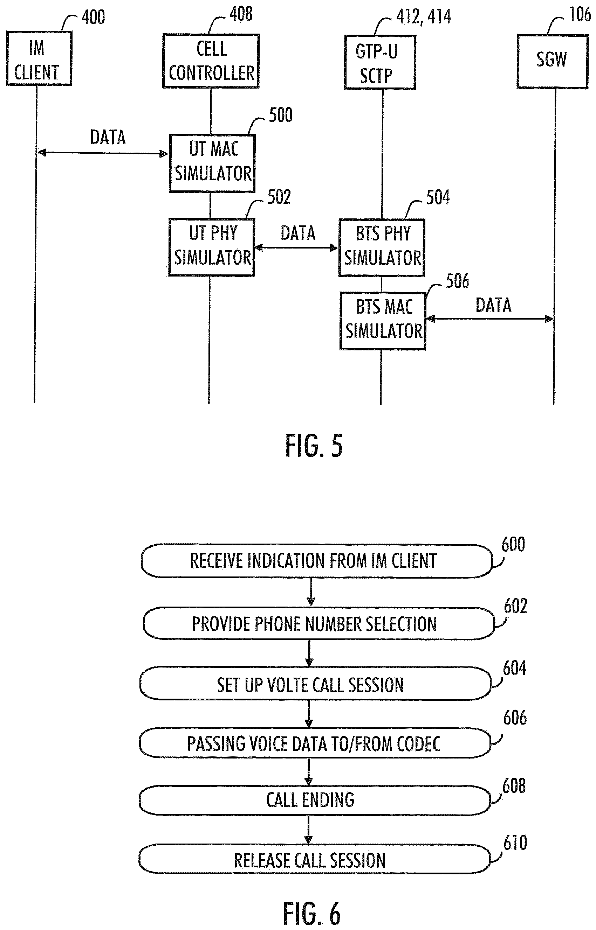

Figure 5 illustrates an example of the operation of the RAN Adaptor. The IM client 400 is not aware of the way the call is realised. The Cell Controller 408 of the RAN Adaptor simulates the LTE air interface towards the application programming interface API 402 and voice codec 404. The RAN Adaptor is further configured to translate IM client data into 3GPP Packet Data Convergence Protocol PDCP format, by simulating 3GPP standardized user terminal Medium Access Control 500 and Physical Layer 502 protocols. Further, base station Physical Layer 504 and Medium Access Control 506 simulators are implemented in the GTP-U encapsulation /decapsulation unit 412 and SCTP encapsulation/decapsulation unit 414 of the RAN Adaptor and they deliver 3GPP GTP-U packets to the SGW 106.

Figure 6 is a flowchart illustrating an example when making a voice call using the RAN Adaptor.

When an IM client user wants to create a voice call, he may first select the installed adaptor application and indicate that a voice call is to be made. The Adaptor receives 600 the indication and initiates the calling procedure by providing 602 the user a phone number selection to choose from. In this example it is assumed that more than one eSIM subscriber numbers have been installed. If this is not the case, this step is skipped. The Adaptor is configured to receive the user selection and the NAS entity of the Adaptor is configured to initialize signalling 604 for VoLTE session setup. In addition, signalling exchange between Adaptor and MME is carried over SCTP IPSec tunnel.

After VoLTE session is created, the voice codec is configured to generate voice data and send to the Adaptor which encapsulates the voice data with GTP-U over IPSec format and forwards 606 it to Wi-Fi base band chip. Likewise, the received voice data is forward from the RAN Adaptor to voice codec.

When the IM client user decides 608 to end up the VoLTE call session, the NAS entity of the Adaptor initiates signalling processing 610 for releasing VoLTE call session. Signalling exchange path is same as in step 604.

As IPSec is created and used for connecting the RAN Adaptor to SGW/MME so that Quality of Service class identifier QCI can be applied. Compared to VoWiFi solution, voice traffic latency of the proposed solution is down from about 150 ms to few milliseconds.

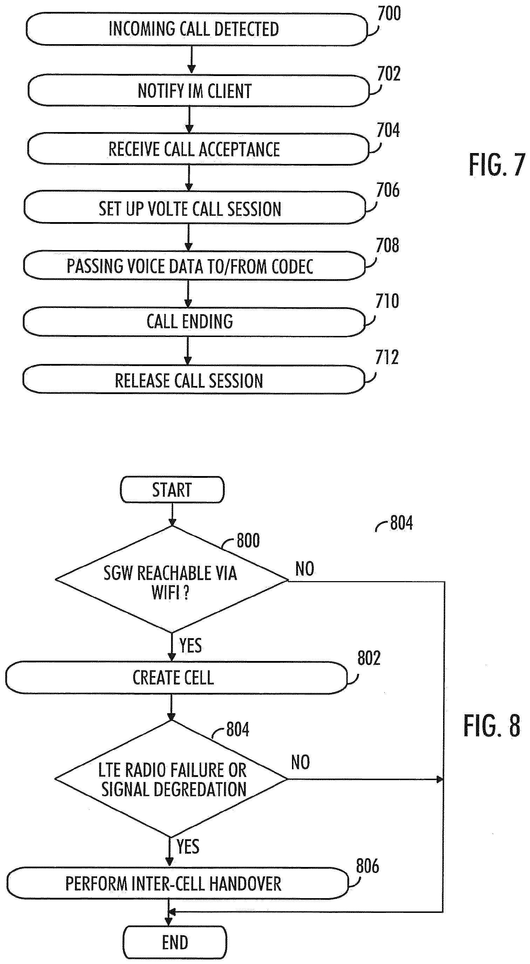

Figure 7 is a flowchart illustrating an example when receiving a voice call using the RAN Adaptor.

In step 700, the RAN Adaptor detects incoming call. If the RAN Adaptor comprises more than one eSIMs and subscriber identities, the Adaptor is configured to determine to which identity or phone number the call is directed to. That is, each of one or more embedded subscriber modules may be associated with a different phone number as alternatives for calling. In step 702, the RAN Adaptor is configured to inform the IM client about the call, the calling and the called number.

In step 704, the RAN Adaptor is configured to receive call acceptance from the IM client.

In step 706, the NAS entity of the Adaptor is configured to initialize signalling for VoLTE session setup. In addition, signalling exchange between Adaptor and MME is carried over SCTP IPSec tunnel.

After VoLTE session is created, the voice codec is configured to generate voice data and send to the Adaptor which encapsulates the voice data with GTP-U over IPSec format and forwards 708 it to Wi-Fi base band chip. Likewise, the received voice data is forward from the RAN Adaptor to the voice codec.

When the IM client user decides 710 to end up the VoLTE call session, the NAS entity of the Adaptor initiates signalling processing 712 for releasing VoLTE call session. Signalling exchange path is same as in step 706.

Figure 8 is a flowchart illustrating an example of a handover from LTE to RAN Adaptor controlled wireless local area net call.

In step 800, the RAN adaptor determines whether a wireless connection is available and a data connection via the connection can be made. The wireless connection may be via an IEEE 802.11 wireless local area network, for example.

In such a case, the RAN Adaptor is configured to create a self-serving cell in step 802 as described earlier.

In step 804, it is detected that there is a LTE radio connection failure or the LTE quality is degrading.

In step 806, user terminal is configured to perform an inter-cell handover from the LTE cell to the self-serving cell of the RAN Adaptor.

In the case when there is a voice call connection via the WiFi connection, and a handover is needed, the RAN adaptor may perform an IEEE 802.11 type handover to another WIFi network for the backbone WiFi connection. This handover as such does not affect the self-serving cell. Another possibility is to perform an inter-cell handover from the self-serving cell of the RAN Adaptor to a LTE cell, if such is available. For example, said cell may be served by the eNB (or in general the cell is served by a network node).

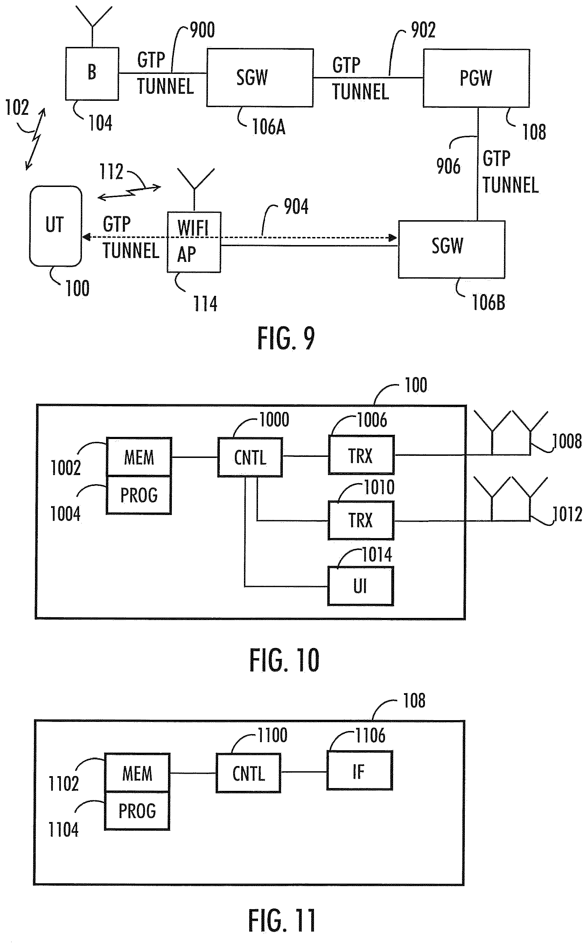

Figure 9 illustrates an example of handover connections. When the user terminal 100 is connected to PGW via LTE network, there is a radio connection 102 to the eNodeB 104, from which there is a GTP tunnel 900 to SGW 106A and a GTP tunnel 902 to PGW.

When the user terminal 100 is connected to PGW via WiFi network, RAN Adaptor in the user terminal has created a GTP connection 904 from the RAN Adaptor to the SGW 106B via the backbone network provided by the WiFi access point 114. The SGW 106B is connected to the PGW via a GTP tunnel 906. The SGWs 106A and 106B may be the same.

Embodiments of the invention, thus utilise a WiFi connection as a backhauling connection. Thus whether the underlying WIFi connection is a trusted or an untrusted Wi-Fi network is of no consequence. The IEEE 802.11 standards group provide handover mechanics (between Wi-Fi Access Points) for backhauling connectivity. The embodiments provide a 3GPP standardized inter-cell handover mechanism to support VoLTE call continuity across between LTE and Wi-Fi networks, considering voice traffic is carried via GTP over an IPSec tunnel and reach the SGW directly instead of ePDG while tehuser terminal is attached to the Wi-Fi network. Compared to a VoWiFi solution, the proposed solution the complicated inter-RAT handover mechanism is much more simplified (as replaced with an inter-cell handover) and implementation effort is much smaller.

The RAN Adaptor may be realised with an application provided by a Mobile Network Operator MNO. The Application may contain multiple eSIMs. Further, the user terminal may download and install multiple RAN adaptor applications from more than one MNOs. Thus the user may reach multiple MNO serving access networks. Compared to a VoWiFi solution, over-the-top IM client may select any MNO's RAN to create a VoLTE call session depending on network connectivity and charging costs.

The user terminal (or user equipment, UE) 100 illustrates one type of an apparatus to which resources on the air interface are allocated and assigned, and thus any feature described herein with user apparatus (user equipment) may be implemented with a corresponding apparatus. The user apparatus 100 refers to a portable computing device that includes wireless mobile communication devices, including, but not limited to, the following types of devices: mobile phone, smart-phone, personal digital assistant (PDA), laptop computer, e-reading device, and tablet.

Figure 10 illustrates an embodiment. The figure illustrates a simplified example of user terminal 100 in which embodiments of the invention may be applied. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 1000 configured to control at least part of the operation of the apparatus.

The apparatus may comprise a memory 1002 for storing data. Furthermore the memory may store software 1004 executable by the control circuitry 1000. The memory may be integrated in the control circuitry.

The apparatus comprises a transceiver 1006. The transceiver is operationally connected to the control circuitry 1000. It may be connected to an antenna arrangement 1008 comprising one more antenna elements or antennas. The transceiver may provide the apparatus a radio connection to a cellular network such as an LTE network. The software 1004 may comprise a computer program comprising program code means adapted to cause the control circuitry 1000 of the apparatus to control the transceiver 1006.

The apparatus may comprise another transceiver 1010. The transceiver is operationally connected to the control circuitry 1000. It may be connected to an antenna arrangement 1012 comprising one more antenna elements or antennas. The transceiver may provide the apparatus a radio connection to a wireless local area network, operating according to IEEE 802.11 standard. The software 1004 may comprise a computer program comprising program code means adapted to cause the control circuitry 1000 of the apparatus to control the transceiver 1010.

The apparatus may further comprise an interface 1014 operationally connected to the control circuitry 1000. The interface may comprise a (touch sensitive) display, a speaker, a microphone, for example.

The control circuitry 1000 is configured to execute one or more applications. The applications may be stored in the memory 1002. In an embodiment, the RAN Adaptor described above may be realised as an application executed by the control circuitry. Other realisations of the RAN Adaptor, such as hardware or a combination of hardware and software are naturally possible as well, as one skilled in the art is aware.

Figure 11 illustrates an embodiment. The figure illustrates a simplified example of an apparatus acting as a Packet Domain Gateway 108 of an LTE Network. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities. For example, the apparatus may be realises as one or more servers connected with each other via Internet.

The apparatus of the example includes a control circuitry 1100 configured to control at least part of the operation of the apparatus.

The apparatus may comprise a memory 1102 for storing data. Furthermore the memory may store software 1104 executable by the control circuitry 1100. The memory may be integrated in the control circuitry. The control circuitry 1100 is configured to execute one or more applications. The applications may be stored in the memory 1102.

The apparatus comprises an interface 1106. The interface is operationally connected to the control circuitry 1100. It may connected the apparatus to other apparatuses or servers of the LTE Network, The software 1104 may comprise a computer program comprising program code means adapted to cause the control circuitry 1100 of the apparatus to control the interface 1106.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, the apparatus comprises means for communicating with a core network of a cellular system (e.g. LTE) via another wireless network; means for emulating the operation of a cellular network node (e.g. an eNodeB) by creating a self-serving cell by requesting the core network to establish a cell and by establishing required interfaces between the apparatus and the core network utilising IP Security Architecture (IPSec), and by exchanging signalling with Mobile Management Entity of the cellular network (e.g. LTE network) over IPSec tunnel; and means for establish a voice over cellular network call (e.g. voice over LTE call) and transmit voice traffic to Serving Gateway of the cellular network (e.g. LTE network).

The invention is defined by the appended claims, whereas the above embodiments, examples and aspects are present for aiding in understanding the background and advantages of the invention.

## Claims

1. A user terminal apparatus (100), comprising:
at least one processor (1000) and at least one memory (1002) including a computer program code (1004), and
means (1006, 1008) for connecting (202) to a core network of a cellular network via another wireless network;
means for emulating operation of a cellular network node by being adapted to create (204) a self-serving cell, wherein the means for emulating are adapted to request the core network to establish the cell, establish required interfaces between the apparatus and the core network utilising Internet Protocol Security Architecture, IPSec, and exchange (206) signalling with Mobile Management Entity of the cellular network over IPSec tunnel;
means (1006, 1008) for establishing (208) a voice over cellular network call via said another wireless network and for transmitting voice traffic to Serving Gateway of the cellular network.

2. The apparatus of claim 1, the at least one memory and the computer program code configured to, with the at least one processor, cause the apparatus further to
store in the memory one or more embedded subscriber modules each with a different phone number as alternatives for calling or called numbers.

3. The apparatus of any preceding claim, the at least one memory and the computer program code configured to, with the at least one processor, cause the apparatus further to
determine that a cell served by a network node of the cellular network is available for a voice call,
perform an inter-cell handover from the self-serving cell to the cell served by the network node.

4. The apparatus of any preceding claim, the at least one memory and the computer program code configured to, with the at least one processor, cause the apparatus further to
determine that a connection to a cell served by a network node of the cellular network is lost,
create the self-serving cell as a response to the determination;
perform an inter-cell handover from the cell served by the network node to the self-serving cell.

5. The apparatus of any preceding claim, the at least one memory and the computer program code configured to, with the at least one processor, cause the apparatus further to
establish an IPSec tunnel between the apparatus and Serving Gateway of a cellular network utilising wireless local area network as a backhaul connection.

6. The apparatus of any preceding claim, wherein the another wireless network is an IEEE 802.11 network and the cellular network is one of a Long Term Evolution cellular network, a Long Term Evolution Advanced cellular network, a 5G cellular network.

7. The apparatus of any preceding claim, the at least one memory and the computer program code configured to, with the at least one processor, cause the apparatus further to
request Mobility Management Entity and/or a Serving Gateway Internet Protocol address from Packet Domain Gateway of the cellular network;
receive the address from the Packet Domain Gateway.

8. A method performed by a user terminal apparatus (100), comprising:
connecting (202) to a core network of a cellular network via another wireless network; emulating operation of a cellular network node by
creating (204) a self-serving cell by requesting the core network to establish the cell and by establishing required interfaces between the apparatus and the core network utilising Internet Protocol Security Architecture, IPSec, and by
exchanging (206) signalling with Mobile Management Entity of the cellular network over IPSec tunnel;
establishing (208) a voice over cellular network call via said another wireless network and transmit voice traffic to Serving Gateway of the cellular network.

9. The method of claim 8, further comprising:
storing in the memory one or more embedded subscriber modules each with a different phone number as alternatives for calling or called numbers.

10. The method of any preceding claim 8 to 9, further comprising:
determining that a cell served by a network node of the cellular network is available for a voice call,
performing an inter-cell handover from the self-serving cell to the cell served by the network node.

11. The method of any preceding claim 8 to 10, further comprising:
determining that a connection to a cell served by a network node of the cellular network is lost,
creating the self-serving cell as a response to the determination;
performing an inter-cell handover from the cell served by the network node to the self-serving cell.

12. The method of any preceding claim 8 to 11, further comprising:
establishing an IPSec tunnel between the apparatus and Serving Gateway of a cellular network.

13. The method of any preceding claim 8 to 12, wherein the another wireless network is an IEEE 802.11 network and the cellular network is one of a Long Term Evolution cellular network, a Long Term Evolution Advanced cellular network, a 5G cellular network.

14. The method of any preceding claim 8 to 13, further comprising:
requesting Mobility Management Entity and/or Serving Gateway Internet Protocol address from Packet Domain Gateway of the cellular network;
receiving the address from the Packet Domain Gateway.

15. A computer program product embodied on a distribution medium readable by a computer and comprising program instructions which, when loaded into a user terminal apparatus,
execute the steps of connecting (202) to a core network of a cellular network via another wireless network; emulating operation of a cellular network node by create (204) a self-serving cell by requesting the core network to establish the cell and
by establishing required interfaces between the apparatus and the core network utilising Internet Protocol Security Architecture, IPSec, and by
exchanging (206) signalling with Mobile Management Entity of the cellular network over IPSec tunnel;
establishing (208) a voice over cellular network call via said another wireless network and transmit voice traffic to Serving Gateway of the cellular network.

## Patentansprüche

1. Benutzerendgerätevorrichtung (100), die Folgendes umfasst:
mindestens einen Prozessor (1000) und mindestens einen Speicher (1002), der einen Computerprogrammcode (1004) beinhaltet, und
Mittel (1006, 1008) zum Verbinden (202) mit einem Kernnetzwerk eines Mobilfunknetzwerks via ein anderes drahtloses Netzwerk;
Mittel zum Emulieren eines Betriebs eines Mobilfunknetzwerkknotens durch Angepasstsein, eine Selbstbedienungszelle zu erstellen (204), wobei die Mittel zum Emulieren angepasst sind, beim Kernnetzwerk anzufordern, die Zelle einzurichten, unter Verwendung einer Internetprotokollsicherheits(IPSec)-Architektur erforderliche Schnittstellen zwischen der Vorrichtung und dem Kernnetzwerk einzurichten und eine Signalisierung mit einer Mobilfunkverwaltungsentität des Mobilfunknetzwerks über einen IPSec-Tunnel auszutauschen (206);
Mittel (1006, 1008) zum Einrichten (208) eines Voiceover-Mobilfunknetzwerk-Anrufs via das andere drahtlose Netzwerk und zum Übertragen von Sprachverkehr über ein bedienendes Gateway des Mobilfunknetzwerks.

2. Vorrichtung nach Anspruch 1, wobei der mindestens eine Speicher und der Computerprogrammcode dazu ausgelegt sind, mit dem mindestens einen Prozessor die Vorrichtung ferner zu Folgendem zu veranlassen
Speichern von einem oder mehreren eingebetteten Teilnehmermodulen mit einer anderen Telefonnummer als Alternativen für anrufende oder angerufene Nummern im Speicher.

3. Vorrichtung nach einem der vorhergehenden Ansprüche, wobei der mindestens eine Speicher und der Computerprogrammcode dazu ausgelegt sind, mit dem mindestens einen Prozessor die Vorrichtung ferner zu Folgendem zu veranlassen
Bestimmen, dass eine Zelle, die von einem Netzwerkknoten des Mobilfunknetzwerks bedient wird, für einen Sprachanruf verfügbar ist,
Durchführen einer interzellularen Übergabe, von der Selbstbedienungszelle an die Zelle, die vom Netzwerkknoten bedient wird.

4. Vorrichtung nach einem der vorhergehenden Ansprüche, wobei der mindestens eine Speicher und der Computerprogrammcode dazu ausgelegt sind, mit dem mindestens einen Prozessor die Vorrichtung ferner zu Folgendem zu veranlassen
Bestimmen, dass eine Verbindung zu einer Zelle, die von einem Netzwerkknoten des Mobilfunknetzwerks bedient wird, verloren gegangen ist,
Erstellen einer Selbstbedienungszelle als Reaktion auf die Bestimmung;
Durchführen einer interzellularen Übergabe, von der Zelle, die vom Netzwerkknoten bedient wird, an die Selbstbedienungszelle.

5. Vorrichtung nach einem der vorhergehenden Ansprüche, wobei der mindestens eine Speicher und der Computerprogrammcode dazu ausgelegt sind, mit dem mindestens einen Prozessor die Vorrichtung ferner zu Folgendem zu veranlassen
Einrichten eines IPSec-Tunnels zwischen der Vorrichtung und einem bedienenden Gateway eines Mobilfunknetzwerks unter Verwendung eines drahtlosen lokalen Netzwerks als eine Backhaulverbindung.

6. Vorrichtung nach einem der vorhergehenden Ansprüche, wobei das andere drahtlose Netzwerk ein IEEE-802.11-Netzwerk und das Mobilfunknetzwerk eines von einem Long-Term-Evolution-Mobilfunknetzwerk, einem erweiterten Long-Term-Evolution-Mobilfunknetzwerk, einem 5G-Mobilfunknetzwerk ist.

7. Vorrichtung nach einem der vorhergehenden Ansprüche, wobei der mindestens eine Speicher und der Computerprogrammcode dazu ausgelegt sind, mit dem mindestens einen Prozessor die Vorrichtung ferner zu Folgendem zu veranlassen
Anfordern der Internetprotokolladresse einer Mobilitätsverwaltungsentität und/oder eines bedienenden Gateways von einem Paketdomänengateway des Mobilfunknetzwerks;
Empfangen der Adresse vom Paketdomänengateway.

8. Verfahren, das von einer Benutzerendgerätevorrichtung (100) durchgeführt wird und Folgendes umfasst:
Verbinden (202) mit einem Kernnetzwerk eines Mobilfunknetzwerks via ein anderes drahtloses Netzwerk;
Emulieren eines Betriebs eines Mobilfunknetzwerkknotens durch Erstellen (204) einer Selbstbedienungszelle durch Anfordern beim Kernnetzwerk, die Zelle einzurichten, und durch Einrichten von erforderlichen Schnittstellen zwischen der Vorrichtung und dem Kernnetzwerk unter Verwendung einer Internetprotokollsicherheits(IPSec)-Architektur und durch Austauschen (206) einer Signalisierung mit einer Mobilfunkverwaltungsentität des Mobilfunknetzwerks über einen IPSec-Tunnel;
Einrichten (208) eines Voice-over-Mobilfunknetzwerk-Anrufs via das andere drahtlose Netzwerk und Übertragen von Sprachverkehr über ein bedienendes Gateway des Mobilfunknetzwerks.

9. Verfahren nach Anspruch 8, das ferner Folgendes umfasst:
Speichern von einem oder mehreren eingebetteten Teilnehmermodulen mit einer anderen Telefonnummer als Alternativen für anrufende oder angerufene Nummern im Speicher.

10. Verfahren nach einem der vorhergehenden Ansprüche 8 bis 9, das ferner Folgendes umfasst:
Bestimmen, dass eine Zelle, die von einem Netzwerkknoten des Mobilfunknetzwerks bedient wird, für einen Sprachanruf verfügbar ist,
Durchführen einer interzellularen Übergabe, von der Selbstbedienungszelle an die Zelle, die vom Netzwerkknoten bedient wird.

11. Verfahren nach einem der vorhergehenden Ansprüche 8 bis 10, das ferner Folgendes umfasst:
Bestimmen, dass eine Verbindung zu einer Zelle, die von einem Netzwerkknoten des Mobilfunknetzwerks bedient wird, verloren gegangen ist,
Erstellen einer Selbstbedienungszelle als Reaktion auf die Bestimmung;
Durchführen einer interzellularen Übergabe, von der Zelle, die vom Netzwerkknoten bedient wird, an die Selbstbedienungszelle.

12. Verfahren nach einem der vorhergehenden Ansprüche 8 bis 11, das ferner Folgendes umfasst:
Einrichten eines IPSec-Tunnels zwischen der Vorrichtung und einem bedienenden Gateway eines Mobilfunknetzwerks.

13. Verfahren nach einem der vorhergehenden Ansprüche 8-12, wobei das andere drahtlose Netzwerk ein IEEE-802.11-Netzwerk und das Mobilfunknetzwerk eines von einem Long-Term-Evolution-Mobilfunknetzwerk, einem erweiterten Long-Term-Evolution-Mobilfunknetzwerk, einem 5G-Mobilfunknetzwerk ist.

14. Verfahren nach einem der vorhergehenden Ansprüche 8 bis 13, das ferner Folgendes umfasst:
Anfordern der Internetprotokolladresse einer Mobilitätsverwaltungsentität und/oder eines bedienenden Gateways von einem Paketdomänengateway des Mobilfunknetzwerks;
Empfangen der Adresse vom Paketdomänengateway.

15. Computerprogrammprodukt, das auf einem Verteilungsmedium enthalten ist, das von einem Computer lesbar ist und Programmanweisungen umfasst, die, wenn sie in eine Benutzerendgerätevorrichtung geladen werden, die folgenden Schritte ausführen
Verbinden (202) mit einem Kernnetzwerk eines Mobilfunknetzwerks via ein anderes drahtloses Netzwerk;
Emulieren eines Betriebs eines Mobilfunknetzwerkknotens durch Erstellen (204) einer Selbstbedienungszelle durch Anfordern beim Kernnetzwerk, die Zelle einzurichten, und durch Einrichten von erforderlichen Schnittstellen zwischen der Vorrichtung und dem Kernnetzwerk unter Verwendung einer Internetprotokollsicherheits(IPSec)-Architektur und durch Austauschen (206) einer Signalisierung mit einer Mobilfunkverwaltungsentität des Mobilfunknetzwerks über einen IPSec-Tunnel;
Einrichten (208) eines Voice-over-Mobilfunknetzwerk-Anrufs via das andere drahtlose Netzwerk und Übertragen von Sprachverkehr über ein bedienendes Gateway des Mobilfunknetzwerks.

## Revendications

1. Terminal utilisateur (100), qui comprend :
au moins un processeur (1000) et au moins une mémoire (1002) qui comprend un code de programme informatique (1004), et
des moyens (1006, 1008) destinés à la connexion (202) à un réseau central d'un réseau cellulaire via un autre réseau sans fil ;
un moyen destiné à émuler le fonctionnement d'un nœud de réseau cellulaire en étant adapté pour créer (204) une cellule à desserte automatique, dans lequel le moyen d'émulation est adapté pour demander au réseau central d'établir la cellule, d'établir les interfaces nécessaires entre l'appareil et le réseau central à l'aide d'une architecture de sécurité de protocole Internet Protocol, IPSec, et pour échanger (206) des signaux avec une entité de gestion mobile du réseau cellulaire sur un tunnel IPSec ;
des moyens (1006, 1008) destinés à établir (208) un appel de voix sur réseau cellulaire via ledit autre réseau sans fil et à transmettre un trafic vocal vers une passerelle de desserte du réseau cellulaire.

2. Appareil selon la revendication 1, dans lequel la au moins une mémoire et le code de programme informatique sont configurés, avec le au moins un processeur, pour permettre en outre à l'appareil
de stocker dans la mémoire un ou plusieurs module(s) d'abonnés intégré(s) qui possèdent chacun un numéro de téléphone différent en guise d'alternatives pour des numéros d'appel ou appelés.

3. Appareil selon l'une quelconque des revendications précédentes, dans lequel la au moins une mémoire et le code de programme informatique sont configurés, avec le au moins un processeur, pour permettre en outre à l'appareil
de déterminer qu'une cellule desservie par un nœud de réseau du réseau cellulaire est disponible pour un appel vocal,
d'effectuer un transfert inter-cellulaire de la cellule à desserte automatique vers la cellule desservie par le nœud de réseau.

4. Appareil selon l'une quelconque des revendications précédentes, dans lequel la au moins une mémoire et le code de programme informatique sont configurés, avec le au moins un processeur, pour permettre en outre à l'appareil
de déterminer qu'une connexion à une cellule desservie par un nœud de réseau du réseau cellulaire est perdue,
de créer la cellule à desserte automatique en réponse à la détermination ;
d'effectuer un transfert inter-cellulaire de la cellule desservie par le nœud de réseau vers la cellule à desserte automatique.

5. Appareil selon l'une quelconque des revendications précédentes, dans lequel la au moins une mémoire et le code de programme informatique sont configurés, avec le au moins un processeur, pour permettre en outre à l'appareil
d'établir un tunnel IPSec entre l'appareil et la passerelle de desserte d'un réseau cellulaire en utilisant un réseau local sans fil comme connexion secondaire.

6. Appareil selon l'une quelconque des revendications précédentes, dans lequel l'autre réseau sans fil est un réseau IEEE 802.11 et le réseau cellulaire est l'un d'un réseau cellulaire à évolution à long terme, d'un réseau cellulaire avancé à évolution à long terme, et d'un réseau cellulaire 5G.

7. Appareil selon l'une quelconque des revendications précédentes, dans lequel la au moins une mémoire et le code de programme informatique sont configurés, avec le au moins un processeur, pour permettre en outre à l'appareil
de demander l'adresse IP de l'entité de gestion de mobilité et/ou de la passerelle de desserte auprès de la passerelle de domaine par paquets du réseau cellulaire ;
de recevoir l'adresse de la part de la passerelle de domaine par paquets.

8. Procédé exécuté par un terminal utilisateur (100), qui comprend :
la connexion (202) à un réseau central d'un réseau cellulaire via un autre réseau sans fil ;
l'émulation du fonctionnement d'un nœud de réseau cellulaire en créant (204) une cellule à desserte automatique en demandant au réseau central d'établir la cellule et en établissant les interfaces nécessaires entre l'appareil et le réseau central en utilisant une architecture de sécurité de protocole Internet, IPSec, et en échangeant (206) des signaux avec une entité de gestion mobile du réseau cellulaire sur un tunnel IPSec ;
l'établissement (208) d'un appel de voix sur réseau cellulaire via ledit autre réseau sans fil et la transmission d'un trafic vocal vers une passerelle de desserte du réseau cellulaire.

9. Procédé selon la revendication 8, qui comprend en outre :
le stockage, dans la mémoire, d'un ou plusieurs module(s) d'abonnés intégré(s) qui possèdent chacun un numéro de téléphone différent en guise d'alternatives pour des numéros d'appel ou appelés.

10. Procédé selon l'une quelconque des revendications 8 à 9, qui comprend en outre :
la détermination du fait qu'une cellule desservie par un nœud de réseau du réseau cellulaire soit disponible pour un appel vocal,
la réalisation d'un transfert inter-cellulaire de la cellule à desserte automatique vers la cellule desservie par le nœud de réseau.

11. Procédé selon l'une quelconque des revendications 8 à 10, qui comprend en outre :
la détermination du fait qu'une connexion à une cellule desservie par un nœud de réseau du réseau cellulaire soit perdue,
la création de la cellule à desserte automatique en réponse à la détermination ;
la réalisation d'un transfert inter-cellulaire de la cellule desservie par le nœud de réseau vers la cellule à desserte automatique.

12. Procédé selon l'une quelconque des revendications 8 à 11, qui comprend en outre :
l'établissement d'un tunnel IPSec entre l'appareil et la passerelle de desserte d'un réseau cellulaire.

13. Procédé selon l'une quelconque des revendications 8 à 12, dans lequel l'autre réseau sans fil est un réseau IEEE 802.11 et le réseau cellulaire est l'un d'un réseau cellulaire à évolution à long terme, d'un réseau cellulaire avancé à évolution à long terme, et d'un réseau cellulaire 5G.

14. Procédé selon l'une quelconque des revendications 8 à 13, qui comprend en outre :
la demande de l'adresse IP de l'entité de gestion de mobilité et/ou de la passerelle de desserte auprès de la passerelle de domaine par paquets du réseau cellulaire ;
la réception de l'adresse de la part de la passerelle de domaine par paquets.

15. Produit de programme informatique intégré à un support de distribution lisible par un ordinateur et qui comprend des instructions de programme qui, lorsqu'elles sont chargées sur un terminal utilisateur, exécutent les étapes
de connexion (202) à un réseau central d'un réseau cellulaire via un autre réseau sans fil ;
d'émulation du fonctionnement d'un nœud de réseau cellulaire en créant (204) une cellule à desserte automatique en demandant au réseau central d'établir la cellule et en établissant les interfaces nécessaires entre l'appareil et le réseau central en utilisant une architecture de sécurité de protocole Internet, IPSec, et en échangeant (206) des signaux avec une entité de gestion mobile du réseau cellulaire sur un tunnel IPSec ;
d'établissement (208) d'un appel de voix sur réseau cellulaire via ledit autre réseau sans fil et la transmission d'un trafic vocal vers une passerelle de desserte du réseau cellulaire.
